# EUROPEAN PATENT APPLICATION

(11) **EP 2 455 237 A1**
(43) Date of publication of application: **23.05.2012**
(21) Application number: 11189959.7
(22) Date of filing: 21.11.2011
(51) Int. Cl.: B60C 15/00

(54) **Pneumatic tire carcass with non-continuous ply in the bead areas**

(30) Priority: 23.11.2010 US 952370
(71) Applicant: The Goodyear Tire & Rubber Company, Akron, OH 44316-0001 (US)
(72) Inventor: Andonian, Archie Arsavir Takfor, Hudson, OH Ohio 44236 (US); Villanueva, Roel Domingo, Brecksville, OH Ohio 44141 (US); Neubauer, Robert Anthony, Medina, OH Ohio 44256 (US)
(74) Representative: Kutsch, Bernd

(57) **Abstract**

A pneumatic tire comprising a carcass (30) comprising first and second annular beads (34) is disclosed. The carcass (30) comprises at least one a continuous ply (38) having a first end (40) proximal to the first annular bead and a second end (42) proximal to the second annular bead, and at least one non-continuous ply (44) with a first portion (46) and a second portion (48) separate and distinct from the first portion (46). The first portion (46) of the non-continuous ply (44) extends around the first annular bead, does not extend above the RhoM line of the carcass (30) and has first and second ends (50, 52). The second portion (48) of the non-continuous ply (44) extends around the second annular bead, does not extend above the RhoM line of the carcass (30) and has first and second ends (54, 56). The second end (42) of the continuous ply (38) is positioned between the first and second ends (54, 56) of the second end (42) of the non-continuous ply (38) and/or the first end (40) of the continuous ply (38) is positioned between the first and second ends (50, 52) of the first portion (46) of the non-continuous ply (44).

## Description

### Field of the Invention

This invention generally relates to a carcass ply arrangement for a pneumatic tire.

### Description of the Related Art

It is now well known to build pneumatic radial tire carcasses with split or non-continuous plies. Pneumatic radial tires are typically built on tire building drums that are approximately one half of the tire's finished diameter. The tire diameter is then greatly increased through gas pressure as it is shaped into the belt package. This pressure causes ply overlaps to become stressed. To overcome this stress, tire designers are forced to "over engineer" the amount of overlap between the non-continuous plies to allow for the shaping stress. This additional overlap causes excessive tire weight and cost to be added to the final product and provides little, if any, benefit in the final product.

It is also known that the sidewall and upper crown area of a tire undergoes cyclic deformation as the tire goes into and out of the footprint. Overlap of the non-continuous plies in this region could cause the tire's reinforcement to become overworked and thus provide less product performance than desired.

It is further known that for existing non-continuous ply constructions the corresponding tire building machine must be capable of providing relatively high turn-up capability. Thus, non-standard tire building machines are required to build such carcasses.

What is needed, then, is a tire carcass with a non-continuous ply that overcomes these disadvantages while providing good performance and easy tuneability for the tire designer.

### Summary of the Invention

The invention relates to a pneumatic tire and a carcass for such a tire in accordance with claim 1.

Dependent claims refer to preferred embodiments of the invention.

According to one embodiment of this invention, a carcass for a pneumatic tire may comprise: first and second annular beads; a continuous ply having a first end proximal to the first annular bead and a second end proximal to the second annular bead; and, a non-continuous ply with a first portion and a second portion separate and distinct from the first portion. The first portion of the non-continuous ply: (1) may extend around the first annular bead; (2) may not extend above the RhoM line of the carcass for a pneumatic tire; and, (3) may have first and second ends. The first end of the continuous ply may be positioned between the first and second ends of the first portion of the non-continuous ply. The second portion of the non-continuous ply: (1) may extend around the second annular bead; (2) may not extend above the RhoM line of the carcass for a pneumatic tire; and, (3) may have first and second ends. The second end of the continuous ply may be positioned between the first and second ends of the second end of the continuous ply.

According to another embodiment of this invention, a carcass for a pneumatic tire may comprise: first and second annular beads; a first ply segment positioned proximal to the first annular bead; a second ply segment positioned proximal to the second annular bead; and, a non-continuous ply with a first portion and a second portion separate and distinct from the first portion. The first portion of the non-continuous ply: may extend around the first annular bead; and, may have first and second ends. The first ply segment may be positioned between the first and second ends of the first portion of the non-continuous ply. The second portion of the non-continuous ply: may extend around the second annular bead; and, may have first and second ends. The second ply segment may be positioned between the first and second ends of the second portion of the non-continuous ply.

According to yet another embodiment of this invention, a carcass for a pneumatic tire may comprise: first and second annular beads; a continuous radial ply having a first end proximal to the first annular bead and a second end proximal to the second annular bead; and, a non-continuous radial ply with a first portion and a second portion separate and distinct from the first portion. The first portion of the non-continuous radial ply: (1) may extend around the first annular bead; (2) may not extend above the RhoM line of the carcass for a pneumatic tire; and, (3) may have first and second ends. The first end of the continuous radial ply may be positioned between the first and second ends of the first portion of the non-continuous radial ply. The second portion of the non-continuous radial ply: (1) may extend around the second annular bead; (2) may not extend above the RhoM line of the carcass for a pneumatic tire; and, (3) may have first and second ends. The second end of the continuous radial ply may be positioned between the first and second ends of the second portion of the non-continuous radial ply. The first end of the continuous radial ply may be positioned between the first annular bead and the first portion of the non-continuous radial ply. The second end of the continuous radial ply may be positioned between the second annular bead and the second portion of the non-continuous radial ply.

One advantage of this invention is that the over engineered overlaps required with known non-continuous plies are eliminated thus reducing tire weight and cost.

Another advantage of this invention is that the overlap of non-continuous plies can be moved away from the sidewall and upper crown area of the tire. This prevents the overworking in known non-continuous carcasses.

Yet another advantage of this invention is that a carcass with a non-continuous ply can be built on standard tire building equipment.

Other benefits and advantages of the invention will become apparent to those skilled in the art to which it pertains upon a reading and understanding of the following detailed specification.

### Brief Description of the Drawings

The invention may take physical form in certain parts and arrangement of parts, embodiments of which will be described in detail in this specification and illustrated in the accompanying drawings which form a part hereof and wherein:
FIGURE 1 is a cross-section of a first example tire constructed in accordance with this invention;
FIGURE 2 is a magnified view of section A-A from FIGURE 1.
FIGURE 3 is a cross-section of a second example tire constructed in accordance with this invention;
FIGURE 4 is a magnified view of section B-B from FIGURE 3; and,
FIGURE 5 is an exemplary view of a tire showing how RhoM may be calculated.

### Definitions

"Apex" means an elastomer component positioned radially above a bead core.

"Axial" and "axially" mean lines or directions that are parallel to the axis of rotation of the tire. "Axially inward" means lines or directions that are parallel to the axis of rotation of the tire and relatively toward the inside of the tire. "Axially outward" means lines or directions that are parallel to the axis of rotation of the tire and relatively toward the outside of the tire.

"Bead" means that part of the tire comprising an annular tensile member and shaped to fit the design rim.

"Carcass" means the tire structure apart from the belt structure, tread, undertread, and sidewall rubber, but including the beads and plies.

"Chafers" refers to narrow strips of material placed around the outside of the bead to protect cord plies from degradation and chaffing caused by movement of the rim against the tire.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Ply" means a continuous layer of rubber-coated cords.

"Radial" and "radially" mean directions radially toward or away from the axis of rotation of the tire.

"Radial-ply tire" means a belted or circumferentially-restricted pneumatic tire in which the ply cords (which may or may not extend from bead to bead) are laid at cord angles between 65 degrees and 90 degrees with respect to the equatorial plane of the tire.

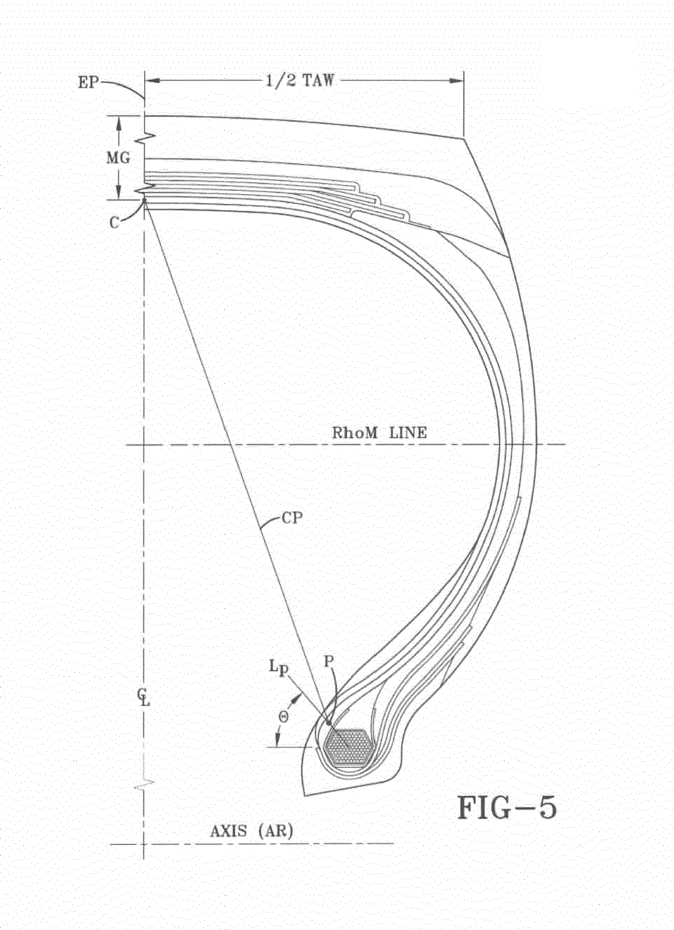

"RhoM" is defined, see FIGURE 5, by finding the center point between the ply line bead pivot point (45 degrees from the bead center at the ply line centerline) and the ply line centerline at the tire radial centerline. To calculate RhoM, one must first locate two points on the tire: the ply line pivot point (P) and ply line centerpoint (C). The ply line pivot point (P) is located at the intersection of the ply line centerline and a line (Lp) drawn at an angle theta of 45 degrees relative to the axis of rotation and extending from the bead center. The ply line centerpoint (C) is located at the ply line centerline at cross-sectional centerline (CL). The minimum gauge (MG) is determined for a given tire by summing the following: 1) desired tread depths; 2) required under tread gauge; 3) reinforcing belt gauges; 4) any insulating gum layers between the above components; and 5) one half of the thickness of the ply. For the embodiment shown, this point is located at the cross-sectional centerline (CL) at the minimum gauge (MG) to the top of the reinforcing ply plus one-half of the ply gauge. The minimum gauge (MG) is determined for a given tire by summing the following: 1) desired tread depth; 2) required undertread gauge; 3) reinforcing belt gauges; 4) any insulating gum layers between the above components; and 5) one-half the thickness of the ply. A line extending between these points defines the line PC. At the midpoint of the PC line, parallel to the axis of rotation is the RhoM line. The distance from the tire's axis of rotation (AR) and the RhoM line is RhoM (or the midline radius). The description of the ply line and other tire geometry parameters are discussed in more detail in US-A- 5,261,474.

"TAW" means tread arc width.

"Tread" means a molded rubber component which, when bonded to the rest of the tire, includes that portion of the tire that comes into contact with the road when the tire is normally inflated and under normal load, that is, the footprint.

### Detailed Description of Example Embodiments of the Invention

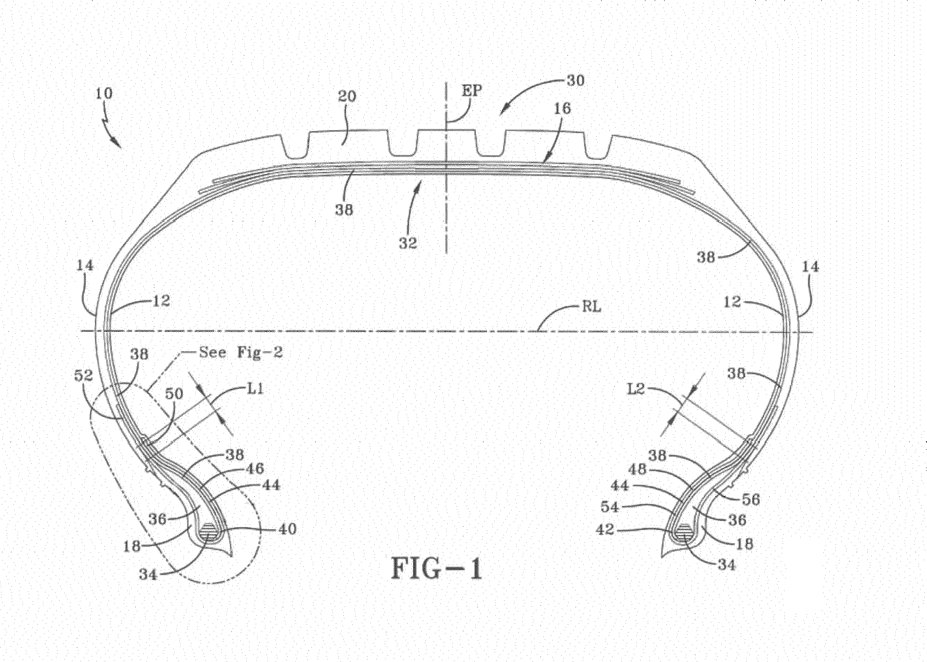

Referring now to the drawings wherein the showings are for purposes of illustrating embodiments of the invention only and wherein like reference numerals are understood to refer to like components, FIGURE 1 shows a pneumatic tire 10 having a carcass 30 according to one embodiment of this invention. The non-carcass portion of the tire 10 may be of any conventional design and includes an inner liner 12 positioned on an inner surface of the carcass 30 and sidewall rubber portions 14, 14 positioned on sides of an outer surface of the carcass 30. Chafers 18, 18 may positioned below the sidewall rubber 14 on lower sides of the outer surface of the carcass 30. A belt package 16 may be positioned on the crown portion 32 of the outer surface of the carcass 30 and a tread 20 may be positioned on the belt package 16. The pneumatic tire 10 has an equatorial plane EP along its centerline and a RhoM line RL. The meaning of "RhoM line" is explained in the definition section above and its determination for a generic tire is shown in FIGURE 5.

With reference now to FIGURES 1-4, the carcass 30 includes first and second annular beads 34, 34 and may include first and second apexes 36, 36 positioned radially above the first and second annular beads 34, 34, respectively. The carcass 30 also includes a continuous radial ply 38 extending from a first end 40 proximal to the first annular bead 34, through the crown portion 32, and to a second end 42 proximal to the second annular bead 34, as shown. The carcass 30 also includes a non-continuous radial ply 44 comprising a first portion 46 and a second portion 48 separate and distinct from the first portion 46. For the embodiment shown, the first portion 46 of the non-continuous radial ply 44 extends around the first annular bead 34 and does not extend above the RhoM line. The second portion 48 of the non-continuous radial ply 44 may similarly extend around the second annular bead 34 and similarly may not extend above the RhoM line. This positioning of the non-continuous ply 44 portions 44, 46 in the bead areas of the tire 10 prevents the non-continuous ply 44 from going through the cyclic deformation that known non-continuous plies experience.

With continuing reference to FIGURES 1-4, the first and second portions 46, 48 of the non-continuous ply 44 have first and second ends 50, 52 and 54, 56, respectively. In one embodiment, the first ends 50, 54 are positioned axially inward of the second ends 52, 56, as shown. The first end 40 of the continuous radial ply 38 may be positioned between the first and second ends 50, 52 of the first portion 46. Similarly, the second end 42 of the continuous radial ply 38 may be positioned between the first and second ends 54, 56 of the second portion 48. This positioning of the continuous ply 38 with respect to the first and second portions 46, 48 of the non-continuous ply 44 provides a stronger connection between the plies and thus reduces the chance for ply slip.

Still referring to FIGURES 1-4, in one embodiment, along a length L1 of the first end 40 of the continuous ply 38 the first end 50 of the first portion 46 of the non-continuous ply 44 contacts an axially inward side of the first end 40 of the continuous ply 38 and the second end 52 of the first portion 46 of the non-continuous ply 44 contacts an axially outward side of the first end 40 of the continuous ply 38. Similarly, along a length L2 of the second end 42 of the continuous ply 38 the first end 54 of the second portion 48 of the non-continuous ply 44 contacts an axially inward side of the second end 42 of the continuous ply 38 and the second end 56 of the second portion 48 of the non-continuous ply 44 contacts an axially outward side of the second end 42 of the continuous ply 38. This contact improves the connection between the plies. The actual dimensions of the lengths L1 and L2 can be any chosen with the proficiency of a person of skill in the art. In a specific embodiment, shown, the lengths L1 and/or L2 may be positioned radially above the apexes 36, 36, respectively.

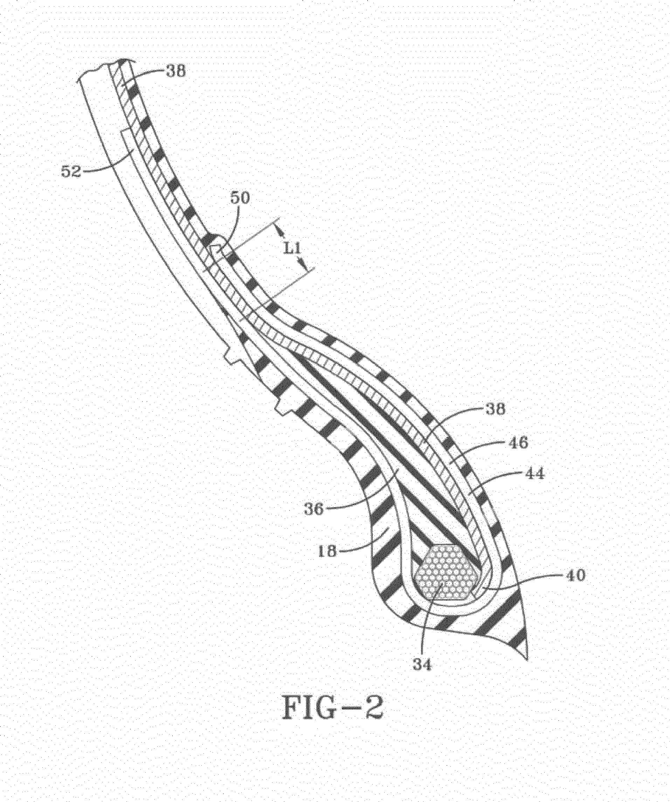

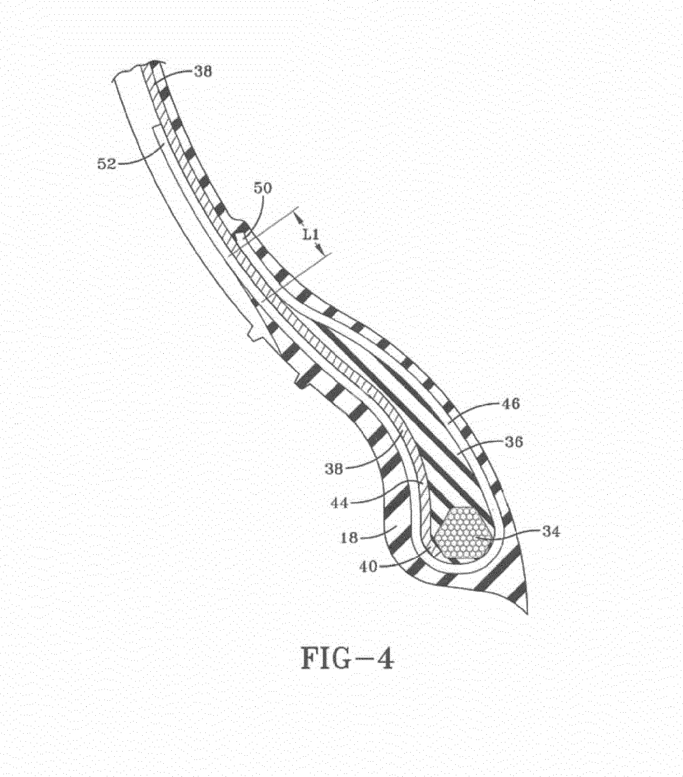

With continuing reference to FIGURES 1-4, in one embodiment, the first end 40 of the continuous radial ply 38 is positioned between the first annular bead 34 and the first portion 46 of the non-continuous radial ply 44 (see especially FIGURES 2 and 4). Similarly, the second end 42 of the continuous radial ply 38 is positioned between the second annular bead 34 and the second portion 48 of the non-continuous radial ply 44. This positioning of the continuous ply 38 with respect to the first and second portions 46, 48 and the annular beads 34, 34 provides a stronger connection for the continuous ply 38 and thus reduces the chance for the continuous ply 38 to slip. In one specific embodiment, the first end 40 of the continuous ply 38 contacts the first bead 34 on one side and contacts the first portion 46 of the non-continuous ply 44 on the other side, as shown. Similarly, the second end 42 of the continuous ply 38 may contact the second bead 34 on one side and contact the second portion 48 of the non-continuous ply 44 on the other side. This close contact of the ends of the continuous ply 38 between the beads 34, 34 and the portions 46, 48 of the non-continuous ply 44 serves to "clamp" the continuous ply 38 to the beads 34, 34.

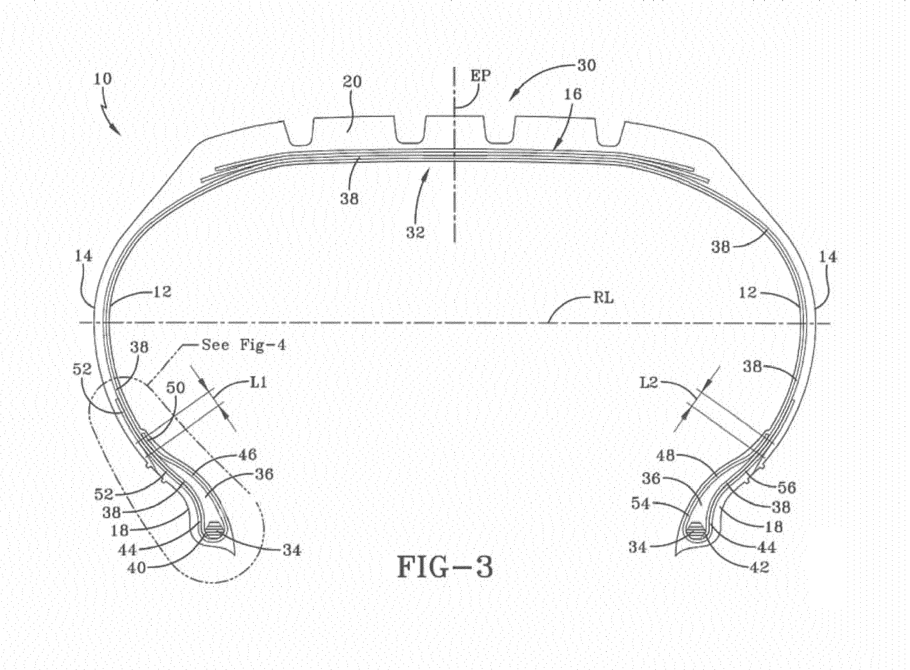

In one embodiment, shown in FIGURES 1-2, the first and second ends 40, 42 of the continuous ply 38 extend at least partially along axially inward sides of the first and second apexes 36, 36, respectively. In another embodiment, shown in FIGURES 3-4, the first and second ends 40, 42 of the continuous ply 38 extend at least partially along axially outward sides of the first and second apexes 36, 36, respectively. In yet another embodiment, either end 40 or 42 of the continuous ply 38 may extend along the axially inward side of an apex 36 while the other end 42 or 40 extends along the axially outward side of the opposite apex 36. This positioning of the continuous ply 38 with respect to the apexes 36, 36 is a design option for the tire designer.

Referring again to FIGURES 1-4, it should be noted that the total length as well as the absolute and relative positioning of the first and second portions 46, 48 of the non-continuous ply 44 can be altered by the tire designer to adjust tire performance as desired. In one embodiment, shown, the second end 52 of the first portion 46 of the non-continuous ply 44 extends radially above the first end 50 and similarly the second end 56 of the second portion 48 of the non-continuous ply 44 extends radially above the first end 56 of the second portion 48 of the non-continuous ply 44.

With continuing reference to FIGURES 1-4, it should be noted that other embodiments are contemplated to enable tire designers to adjust tire performance. In one embodiment, one or both of the plies 38, 44 may not be radial plies. In another embodiment, the continuous ply 38 may be replaced with a non-continuous ply comprising a first segment positioned proximal to the first annular bead 34 and a second segment positioned proximal to the second annular bead 34. The tire designer may also alter the cord angles of the plies 38, 44 and the materials (including fabric and denier) that comprise the cords.

## Claims

1. A pneumatic tire comprising a carcass (30), the carcass (30) comprising first and second annular beads (34), the carcass further comprising:
(A) at least one a continuous ply (38) having a first end (40) proximal to the first annular bead and a second end (42) proximal to the second annular bead, and at least one non-continuous ply (44) with a first portion (46) and a second portion (48) separate and distinct from the first portion (46), wherein:
the first portion (46) of the non-continuous ply (44) extends around the first annular bead, does not extend above the RhoM line of the carcass (30) and has first and second ends (50, 52);
the second portion (48) of the non-continuous ply (44) extends around the second annular bead, does not extend above the RhoM line of the carcass (30) and has first and second ends (54, 56); and
the second end (42) of the continuous ply (38) is positioned between the first and second ends (54, 56) of the second end (42) of the non-continuous ply (38) and/or the first end (40) of the continuous ply (38) is positioned between the first and second ends (50, 52) of the first portion (46) of the non-continuous ply (44); or
(B) a first ply segment positioned proximal to the first annular bead, a second ply segment positioned proximal to the second annular bead, and a non-continuous ply (38) with a first portion (46) and a second portion (48) separate and distinct from the first portion (46), wherein:
the first portion (46) of the non-continuous ply (44) extends around the first annular bead and has first and second ends (50, 52);
the second portion (48) of the non-continuous ply (44) extends around the second annular bead and has first and second ends (54, 56); and
the first ply segment is positioned between the first and second ends (50, 52) of the first portion (46) of the non-continuous ply (44) and/or the second ply segment is positioned between the first and second ends (54, 56) of the second portion (48) of the non-continuous ply (44).

2. The tire having the features of option (A) of claim 1.

3. The tire having the features of option (B) of claim 1.

4. The tire of at least one of the previous claims wherein the second end (42) of the continuous ply (38) is positioned between the first and second ends (54, 56) of the second end (42) of the non-continuous ply (38) and wherein the first end (40) of the continuous ply (38) is positioned between the first and second ends (50, 52) of the first portion (46) of the non-continuous ply (44).

5. The tire of at least one of the previous claims wherein the second end (42) of the continuous ply (38) is positioned between the first and second ends (54, 56) of the second end (42) of the non-continuous ply (38) and wherein the first end (40) of the continuous ply (38) is not positioned between the first and second ends (50, 52) of the first portion (46) of the non-continuous ply (44).

6. The tire of at least one of the previous claims wherein the continuous ply (38) is a continuous radial ply and the non-continuous ply (44) is a non-continuous radial ply.

7. The tire of at least one of the previous claims wherein the first ply segment and the second ply segment are radial ply segments.

8. The tire of at least one of the previous claims further comprising first and second apexes (36) positioned radially above the first and second annular beads (34), respectively, and wherein the first and second ends (40, 42) of the continuous ply (38) extend at least partially along axially inward sides of the first and second apexes (36), respectively.

9. The tire of at least one of the previous claims further comprising first and second apexes (36) positioned radially above the first and second annular beads (34), respectively, and wherein the first and second ends (40, 42) of the continuous ply (38) extend at least partially along axially outward inward sides of the first and second apexes (36), respectively.

10. The tire of at least one of the previous claims wherein:
the first end (50) of the first portion (46) of the non-continuous ply (44) is positioned axially inward of the second end (52) of the first portion (46) of the non-continuous ply (44);
the first end (54) of the second portion (48) of the non-continuous ply (44) is positioned axially inward of the second end (56) of the second portion (48) of the non-continuous ply (44);
along a length of the first end (40) of the continuous ply (38), the first end (50) of the first portion (46) of the non-continuous ply (44) contacts an axially inward side of the first end (40) of the continuous ply (38) and the second end (52) of the first portion (46) of the non-continuous ply (44) contacts an axially outward side of the first end (40) of the continuous ply (38); and,
along a length of the second end (42) of the continuous ply (38), the first end (54) of the second portion (48) of the non-continuous ply (44) contacts an axially inward side of the second end (42) of the continuous ply (38) and the second end (52) of the second portion (48) of the non-continuous ply (44) contacts an axially outward side of the second end (42) of the continuous ply (38).

11. The tire of at least one of the previous claims wherein:
the first end (50) of the first portion (46) of the non-continuous ply (44) is positioned axially inward of the second end (52) of the first portion (46) of the non-continuous ply (44);
the second end (52) of the first portion (46) of the non-continuous ply (44) extends radially above the first end (50) of the first portion (46) of the non-continuous ply (44);
the first end (54) of the second portion (48) of the non-continuous ply (44) is positioned axially inward of the second end (56) of the second portion (48) of the non-continuous ply (44); and
the second end (56) of the second portion (48) of the non-continuous ply (44) extends radially above the first end (54) of the second portion (48) of the non-continuous ply (44).

12. The tire of at least one of the previous claims wherein the first end (40) of the continuous ply (38) is positioned between the first annular bead and the first portion (46) of the non-continuous ply (44); and the second end (42) of the continuous ply (38) is positioned between the second annular bead and the second portion (48) of the non-continuous ply (38).

13. The tire of at least one of the previous claims wherein:
the first end (50) of the first portion (46) of the non-continuous ply (44) is positioned axially inward of the second end (52) of the first portion (46) of the non-continuous ply (44);
the first end (54) of the second portion (48) of the non-continuous ply (44) is positioned axially inward of the second end (56) of the second portion (48) of the non-continuous ply (44);
along a length of the first ply segment, the first end (50) of the first portion (46) of the non-continuous ply (44) contacts an axially inward side of the first ply segment and the second end (52) of the first portion (46) of the non-continuous ply (44) contacts an axially outward side of the first ply segment; and
along a length of the second ply segment, the first end (54) of the second portion (48) of the non-continuous ply (44) contacts an axially inward side of the second ply segment and the second end (56) of the second portion (48) of the non-continuous ply (44) contacts an axially outward side of the second ply segment.

14. The tire of at least one of the previous claims wherein:
the first ply segment is positioned between the first annular bead and the first portion (46) of the non-continuous ply (44); and
the second ply segment is positioned between the second annular bead and the second portion (48) of the non-continuous ply (44).

15. The tire of at least one of the previous claims wherein the first ply segment is a first portion of a second non-continuous ply and the second ply segment is a second portion of the second non-continuous ply.
